Europäisches Patentamt

European Patent Office

Office européen des brevets

(11) Publication number: **0 213 650**
**B1**

# EUROPEAN PATENT SPECIFICATION

(45) Date of publication of the patent specification:
05.09.90

(51) Int. Cl.⁵: **G01S 1/08**

(21) Application number: **86201146.7**

(22) Date of filing: **11.11.81**

(60) Publication number of the earlier application in accordance with Art. 76 EPC: **0056517**

(54) **Method of ascertaining navigational information.**

(30) Priority: **15.01.81  US 225410**

(43) Date of publication of application:
**11.03.87 Bulletin 87/11**

(45) Publication of the grant of the patent:
**05.09.90 Bulletin 90/36**

(84) Designated Contracting States:
**BE DE FR GB NL**

(56) References cited:
**GB-A- 1 554 751**
**US-A- 4 114 153**

(73) Proprietor: **Neidell, Norman S., 315 Vanderpool, Houston Texas 77024(US)**

(72) Inventor: **Neidell, Norman S., 315 Vanderpool, Houston Texas 77024(US)**

(74) Representative: **Boon, Graham Anthony et al, Elkington and Fife Beacon House 113 Kingsway, London, WC2B 6PP(GB)**

ACTORUM AG

## Description

This invention relates to a method of ascertaining navigational information.

According to Karwarth in the Journal of the Institute of Navigation, Vol. 24, No.1, pp. 105-120, January 1, 1971, the basic objective of area navigation is to position in real time with appropriate accuracy one or more mobile platforms with reference to some known coordinate system. The number of coordinates needed depends upon whether the course of the mobile platform can be charted on a known surface or must be described in three-dimensional space as in the respective cases of a ship at sea and an aircraft. The ability to chart a course based on past, present and future desired positions is a principal element in distinguishing an area navigation system from navigation using point-to-point or "homing" approaches such as VOR/DME (VHF Omnidirectional Range/Distance Measuring Equipment).

Positions are established in all cases by signal transmission between the mobile units and at least one transmitter of known location. The transmissions can be electromagnetic (including optical) or acoustic in any medium including air. Two basic methods are normally used to obtain positions:

Positions may be determined from a sufficient number of range measurements to known reference locations by using what is commonly known as "range-range" systems, or positions may be determined from a sufficient number of range differences to known reference locations, by using what is commonly known as "hyperbolic"systems. In each case a sufficient number is at least equal to the number of coordinate values needed.

Direct ranging involves calculation of intersections of the circles or spheres of uniform range from each reference location to the mobile unit. By contrast, the locus of equal range difference from the mobile unit to a pair of reference locations are hyperbolae or hyperboloids of revolution. Again, positions are calculated by intersection of curves or surfaces, but in this case related to the hyperbolae, hence the name hyperbolic systems.

An exemplary task of area navigation might be the positioning of a ship at near shore distances. In range-range operation only two shore stations are needed while a hyperbolic system requires three. Three shore stations admit calculation of two independent range differences. As a general rule, hyperbolic systems offset a disadvantage in requiring one or more known reference location than the simpler range system by not requiring either a time standard or an active transmitter on the ship.

As for the transmitted signals, a variety of differing modes of operation are possible. Ranges can be determined from signal transmission time between the mobile unit and a reference location if the signal initiation time is known, a time standard is available, and a signal propagation velocity is also known. The simplest means for establishing known initiation times is to transmit signals only in response to some interrogation. Alternatively, if transmissions are synchronized to occur at regular time intervals, time differences are readily determined, with no interrogation step needed, using only a local clock and a propagation velocity.

Again, signal transmissions themselves can consist of continuous waveforms (typically sinusoids), intervals of continuous signal transmissions, or sequences of pulses. The choice of transmitted signal reflects consideration of the information desired, mode of operation (range-range versus hyperbolic), noise effects, and the extent of Doppler distortions among other factors.

Continuous waveforms are the most robust signals in the presence of noise backgrounds since correlation-type receivers may take advantage of the extreme signal duration. Such signals have no resolution in time and are used principally with hyperbolic systems to establish time-differences by making phase comparisons with reference signals. Where the transmitter-receiver relative velocity is not insignificant in proportion to the signal propagation velocity, Doppler effects shift the frequencies of continuous waveforms. Frequency shifts may be viewed as errors since they distort subsequent correlation steps and thus degrade phase comparisons; however, if such shifts are measured, they do relate to velocity information should this be desired.

Use of continuous signals over intervals provides time resolution as well as opportunities for correlation detection, but over shorter data windows. Again, any Doppler effects may be viewed either as constituting an error in range determination or if measured, velocity information. The tolerance of such signals to noise effects is of course diminished in direct relation to their shortened duration.

In the limit, as duration is shortened, pulsed signals must be considered which when taken individually offer no opportunity to measure Doppler effects. Hence significant transmitter-receiver relative velocities will be noted as range errors for such systems. These signals are also most affected by the presence of noise, but afford the greatest resolution in making a direct time measurement.

It follows that the alternative methods of operation that exist constitute attempts at optimizing a number of trade-offs which interact with some complexity. The hardware requirement, operations costs, efficiencies and effectiveness in terms of achievable accuracy are all essential ingredients that play roles in the optimization. Navigation systems based on the present invention may generally serve as replacements for such systems and others.

The present invention involves the application of dispersion to signal phase. The phenomenon of dispersion is well known in optics. By way of an appropriate background regarding this principle in order to understand its application to the present invention, an appropriate definition of dispersion, a presentation of the distinguishing characteristics of normal and anomalous dispersion, and a description of various embodiments of dispersion may be found in Sommerfeld, Mechanics of Deformable Bodies, Acadmic Press, New York 396 p, 1950 (see in particular pp. 172-206, 2nd printing 1956), and Longhurst, Geometrical and Physical Optics, Longman, 592 p, 2nd Edition, 1967 (see in particular p. 452 and Fig. 20-4).

It is necessary to distinguish also the phase-angle rotation undergone by a signal in traveling through a dispersive medium or in post-critical angle reflection from a mere time delay. If the angular frequencies contained within the spectrum of a signal having bandwidth range from a value $\omega_1$ to a greater value $\omega_2$, the phase spectrum of the signal over that range will be some function $f(\omega)$, $\omega_1 \leq |\omega| \leq \omega_2$. After traveling through a dispersive medium the change in phase of the signal, which characterizes the degree of dispersion, can be described in first approximation by $\Delta f(\omega) = \theta_1 + \theta_2 \omega$ where $\theta_1$ and $\theta_2$ are constants which depend only on the medium and the distance travelled within the medium.

The value of the constant $\theta_2$ describes the delay of the signal, that is, it is the increment of time that the signal has undergone in traveling through the medium or simply the signal travel time. The phase angle rotation is given by the value of the constant $\theta_1$. Because phase is an angular measure, two signals of like amplitude spectra whose phase spectra differ by an integral multiple of $2\pi$ are identical and hence indistinguishable. It is therefore customary to replace any value of $\theta_1$ that is equal to or greater than $2\pi$ by the residue of $\theta_1$ modulo $2\pi$ or in common terminology by the remainder after dividing $\theta_1$ by $2\pi$. Values of $\theta_1$ modulo $2\pi$ other than O and $\pi$ correspond to changes in the signal shape.

According to the present invention there is provided a method of ascertaining for a mobile unit, navigational information in terms of at least one angular coordinate, comprising:

transmitting from a transmitter to a receiver one of which is located on the mobile unit and the other of which is located on a fixed unit, a component signal which consists of at least one constituent signal which is not a member signal but which can be transformed to a member signal by a linear filtering operation, a member signal being one which is a linear combination of a pair of base signals $f_0(t)$ and $f_1(t)$ which satisfy the following properties to the practical approximation required:

(i) $f_0(t)$ and $f_1(t)$ share a common amplitude spectrum which is substantially flat over both its continuous bands at positive and negative frequencies and is substantially zero elsewhere;

(ii) there is a finite time interval of duration $\alpha$ before and after which both $f_0(t)$ and $f_1(t)$ may be considered to be zero;

(iii) $f_0(t)$ and $f_1(t)$ are in quadrature; and

(iv) $f_0(t)$ and $f_1(t)$ are transformable to odd and even functions respectively about t=0, defined as the central coordinate value in their interval of definition of duration $\alpha$, by a constant phase shift applied to all frequencies, the or each member signal being phase encoded with a distinction in phase with respect to said at least one angular coordinate;

receiving said component signal at said receiver;

transforming the received signal to at least one member signal by linear filtering;

measuring phase for the transformed signal; and

decoding said at least one angular coordinate from said measured phase.

Certain of the signal processing techniques used for this invention may conveniently employ the methods described in US-A 4 114 153 to which attention is directed.

The term "member signal" is defined above. Signals which are member signals or which can be transformed to member signals are referred to generically herein as "constituent signals". The description refers for simplicity to the use of signals which are member signals, but it is to be noted that the invention as claimed is limited to signals which are not member signals but which can be transformed to member signals by a linear filtering operation.

Component signal trains of constituent signals convey all of the navigational information. The component signals which may be concurrently propagating are always separable and distinguishable from one another by some combination of frequency content, polarization character, and constituent signal pattern. Member signals formed after reception and preliminary processing are made up from base signals which are required in accordance with the present invention to have the four basic properties already discussed.

Broad-beam, broad-band transmitters produce component signals which illuminate the navigation area. Broad-beam, broad-band receivers detect these signals. Angular coordinate information is phase encoded in constituent signals by reflective or transmissive mechanisms. All encodings can be substantially characterized by an additive increment to the phase angle consisting of a constant and a second complementary constant which multiplies the frequency. This approximation to the phase effect of dispersion is essentially the first two terms of a Taylor series developed over frequency, the independent variable. In effect, the shape of a constituent signal is changed by encoding a distinction in phase in accordance with the angular coordinate information.

Angular coordinates are referred either to receiver or transmitter locations, and either the receiver or the transmitter can constitute the known location, depending on the particular embodiment. Component signal transmissions can be sent in response to interrogation, at regular time intervals or at random, depending on the selected mode of operation. In all cases the angular coordinate information will be conveyed by the distinction in phase which changes the signal shape.

3

Processing the received component signals to identify constituent signals may be described after formation of member signals by a phase-invariant quadrature-matched-filtering operation which is described in the above U.S. patent. Member signal basic properties and processing of the received component signals are complementary in that frequency shifts resulting from relative motion between the transmitter and receiver affect neither the arrival-time measurements nor the phase-encoded angular coordinate information. The processing includes measurement of member signal phase and a decoding from the measured phase of the encoded angular coordinate information.

Radial/relative velocity components or relative velocity information between mobile platforms and a known location and radial range or distance information may also be conveyed by the component signals. Such determinations are possible if the initial time interval between constituent signals, the initiation times of constituent signal transmissions, the signal propagation velocity in the medium, and a time standard are known or predetermined. Having both range and angular coordinate information allows development of a navigation system which can operate using only a single base station.

Since utilization of phase information is an important feature of the invention, several corrections to compensate for phase distortions are included. Distortions accompanying member signal design and entering during processing are some which fall in this category.

The broad beam nature of the transmitters used in this invention suggests lower signal energy levels in any particular direction than might be achieved with a narrow beam system. Rapid repetition of these broad beam signals can however overcome an energy-level deficit.

Further, the ability to impart angular coordinate information offers opportunities to overcome ambiguities of skywave reflections in electromagnetic embodiments and multipath reflections in sonar application.

By encoding sufficient redundancy in the constituent signals, any phase distortions imparted by the propagation medium may be measured as a part of the decoding operation. This feature adds significantly to the present invention.

The ensuing description includes a description of how the phase distortion for sound waves caused by propagation in water for frequencies in the vicinity of 1.2 mhz can be characterized as a function of the propagation path length.

In the accompanying drawings:

Fig. 1 shows the time and frequency domain properties of a design base signal pair having respectively odd and even symmetry;

Fig. 2 shows schematically a generalized system having a single transmitter and receiver for carrying out the method of the present invention;

Fig. 3 shows a processing sequence for the embodiment of Fig. 2;

Fig. 4 shows the sequence of operations of the navigational information estimator of Fig. 3;

Fig. 5 shows an elementary electromagnetic area navigation system having a single base station;

Fig. 6 shows schematically binary encoded member signals at known intervals for establishing time references;

Fig. 7 shows an experimental apparatus used to characterize the phase distortion caused by the dispersive properties of water at 1.2 mhz;

Fig. 8 shows digitized received member signals for the apparatus of Fig. 7, after transmission through water, and their frequency analyses; and

Fig. 9 shows experimental results indicating the relationship of the phase distortion of member signals at 1.2 mhz with their propagation distance through water.

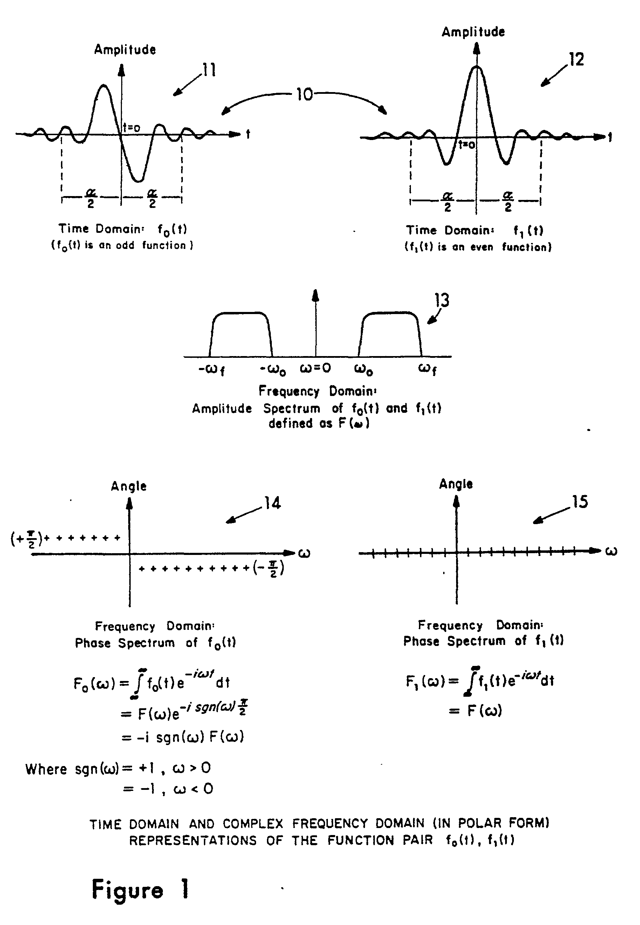

Fig. 1 shows a pair 10 of base signals 11, 12 from which a member signal may be designated. A single member signal is formed as a linear combination of a pair of base signals as defined in above mentioned US-A-4114153. In mathematical terms this signal f(t) may be defined:

$$f(t) = m\, f_0(t) + n\, f_1(t), \qquad\qquad (1)$$

where m and n are constants obeying the relationship $m^2+n^2 = 1$, and $f_0(t)$, $f_1(t)$ represent the base signals.

The four requisite properties I-IV of the base signals $f_0(t)$ and $f_1(t)$ are:

I. $f_0(t)$ and $f_1(t)$ share the common amplitude spectrum $F(\omega)$ 13 which is substantially flat over both its continuous bands at positive and negative frequencies and is essentially zero elsewhere.

II. There is a finite time interval of duration $\alpha$, before and after which both $f_0(t)$ and $f_1(t)$ may be considered to be zero, in other words $f_0(t)$ and $f_1(t)$ are pulses.

III. $f_0(t)$ and $f_1(t)$ are in quadrature or constitute a Hilbert transform pair. In other words, at each common frequency component the signals differ in phase by ninety degrees.

IV. $f_0(t)$ and $f_1(t)$ must be transformable to odd and even functions respectively about $t = o$, defined as the central coordinate value in their interval of definition of duration $\alpha$, by a constant phase shift applied to all frequencies.

Signals termed Klauder signals and Gabor signals described in applicant's referenced patent are in fact representative types of signals appropriate for use as the base signals $f_0(t)$ and $f_1(t)$. Mathematically these two signal types are defined as:

$$\text{Klauder Signals } k_0(t); \ k_1(t) \tag{2A}$$

$$k_0(t) = A \ \frac{\cos w_f t - \cos w_0 t}{(w_f - w_0)t}$$

$$k_1(t) = A \ \frac{\sin w_f t - \sin w_0 t}{(w_f - w_0)t}$$

$$w_0; w_f \text{ and A are constants; and}$$

$$k_0(t) = k_1(t) = o \text{ for } |t| \geqq \frac{\alpha}{2}$$

$$\text{Gabor Signals } g_0(t); \ g_1(t) \tag{2B}$$

$$g_0(t) = A \frac{\frac{t}{t_0}}{1 + \cdot \frac{t}{t_0}^2}$$

$$g_1(t) = A \frac{1}{1 + \frac{t}{t_0}^2}$$

$$t_0 \text{ and A are constants; and}$$

$$g_0(t) = g_1(t) = 0 \text{ for } t \geqq \frac{\alpha}{2}$$

Returning now to Fig. 1 (which corresponds to Fig. 12 of my referenced U.S. patent), there is shown a diagram of the time domain (10) and Fourier frequency domain (14, 15) properties of the Klauder base signal pair termed $f_0(t)$ (refer to Equation (2A) which illustrate the four requisite properties (I through VI) for base signals.

It is important to recognize that any signal which occupies a band of contiguous frequencies having no frequency missing over the defined bandwidth, or a signal which has frequency bandwidth, can be simply transformed in character to that of a member signal by a linear filtering operation. As a member signal it will have a structure as described in terms of a base signal pair. The filters described by Wiener in Extrapolation, Interpolation and Smoothing of Stationary Time Series, M.I.T. Press, Cambridge, 1949, are particularly suited to such task. Hence any signals having frequency bandwidth may be employed in the manner of this invention by including as a step in the processor a transformation of that signal to member signal character.

For clarity of presentation the embodiments included herein will be described in terms of signal transmissions having the form of member signals. It will be readily understood by those skilled in the art that each embodiment may employ appropriate signals of more general nature by providing a suitable linear filter operation step in the processor, and the claims herein are directed to this possibility.

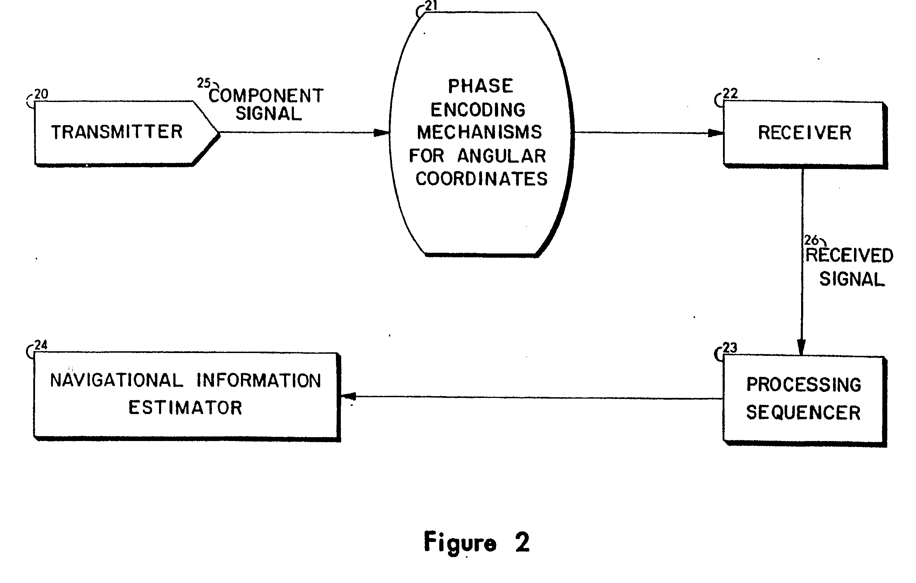

Figure 2 shows a generalized system for carrying out the present invention, which employs a single transmitter 20 and receiver 22. The transmitter 20 produces at least one component signal 25. A component signal is a train of member signals which is always separable and distinguishable from other component signals by some preselected combination of frequency content, polarization character and member signal pattern. In cases such as for sonar signals where the polarization character is alike for all signals, the polarization character drops out as a possible distinguishing feature. A discussion on polarization character or state is presented by A.S. Marathay in Optical Engineering, Vol. 15, No.4, p. SR 80-81, July-August, 1976.

For the navigation system of Fig. 2, it is required that a transmitted component signal 25 be received directly, but that somewhere along the propagation path a mechanism interacting with the signal phase be encountered. Such an element can be a phase lens or phase encoding mechanism. Element 21 performs this function. Component signal 25 which propagates with known velocity encounters phase encoding mechanism 21 and is subsequently received by receiver 22. The received component signal 26 is forwarded to the processing sequencer 23 and processing outputs are sent on to the navigational information estimator 24.

The role of the phase encoding mechanism 21 is to encode in each member signal information about one or more angular coordinates as a phase distinction. Also, the phase distinction for each angular coordinate must be unambiguously related to that coordinate. Further, the phase distinction over the applicable frequency band for any given value of the angular coordinate must be representable in good approximation by:

$$G(\omega) = \theta_0 + \theta_1\omega \qquad (3)$$

where, $\theta_0$ is constant phase,

$\theta_1$ is a complementary constant multiplying the angular frequency $\omega$.

$\theta_0$, $\theta_1$ are functions of the angular coordinate thus making $G(\omega)$ a function of the angular coordinate. The code for the angular coordinate is contained in the explicit relation between the coordinate and $G(\omega)$.

Property I as given earlier for the underlying base signals must be substantially retained even after the action of the phase encoding mechanism 21. Equation (3) will be recognized as comprising the first two terms of a Taylor series expansion. Hence the character of this approximation is based upon development of the received member signal phase spectrum as a Taylor series with truncation of the series after the second term. For the $i^{th}$ member signal of a component signal, the following notation will be used:

$$\theta_{io} + \theta_{il}\omega$$

to approximate the measured phase.

Attention is directed to European Patent Application No 81305350.1 (EP-A-0056517) from which the present application is divided and in which are described various phase lenses which may be used in the method of the present invention. The phase lenses may phase encode the outgoing signals or the incoming signals. The phase lenses disclosed in EP-A-0056517 encode the transmitted signals by propagating them through a dispersive medium so that the degree of dispersion varies in accordance with the angular coordinate, or by reflecting them from a surface at an angle beyond the critical angle.

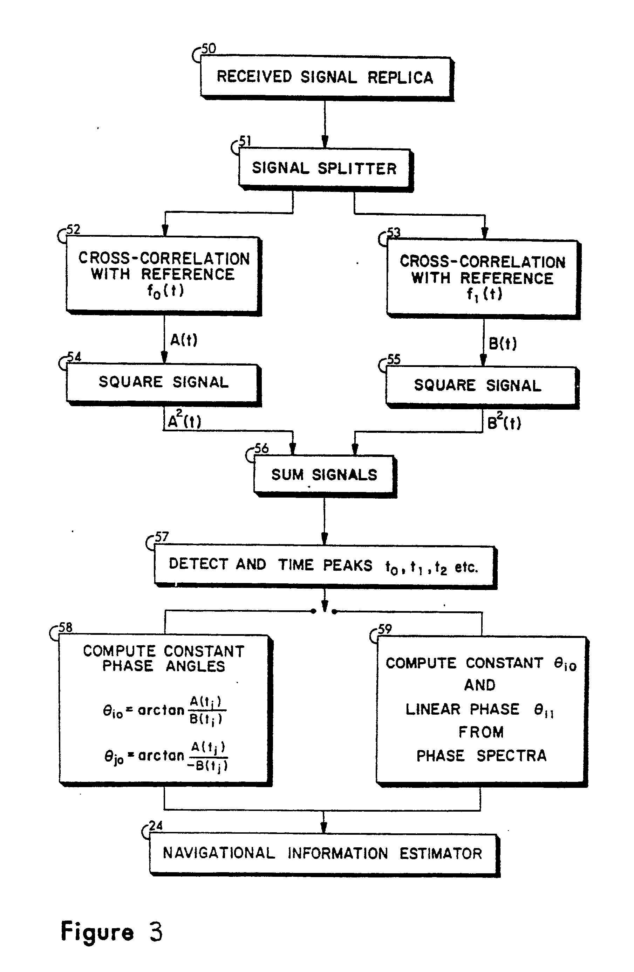

The navigational information for the generalized embodiment of Fig. 2 can be recovered by processing the received component signal 26 through the processing sequencer 23 which is shown in detail in Fig. 3. In Fig. 3 each member signal of the pattern within each component signal must be identified and timed. The mathematical analysis of the operational sequence is given in my referenced patent. Such analysis describes how basic properties I through IV enable individual member signals to be identified and correctly retain arrival time and phase encoded angular coordinate information in spite of appreciable distortions which may be present owing to relative motion between the transmitter and receiver. Also, a phase-invariant quadrature matched-filter processing sequencer employing analogously designed signals was described by Speiser and Whitehouse at a symposium on Spread Spectrum Communications held at the Naval Electronics Laboratory Center, San Diego, March 13-16, 1973.

Member signals are identified for each of the significant peaks detected by element 57. Arrival times can be computed for each member signal with the use of a time standard; however, signal transmission times only can be determined if the signal initiation times are distinct and known. The phases of the member signals can be computed using the alternatives represented by elements 58 and 59. If the method using arctangents of ratios by element 58 is elected, then if more than single member signal is involved, these must be in quadrature. Again, the applicable signal processing is given in the above U.S. patent.

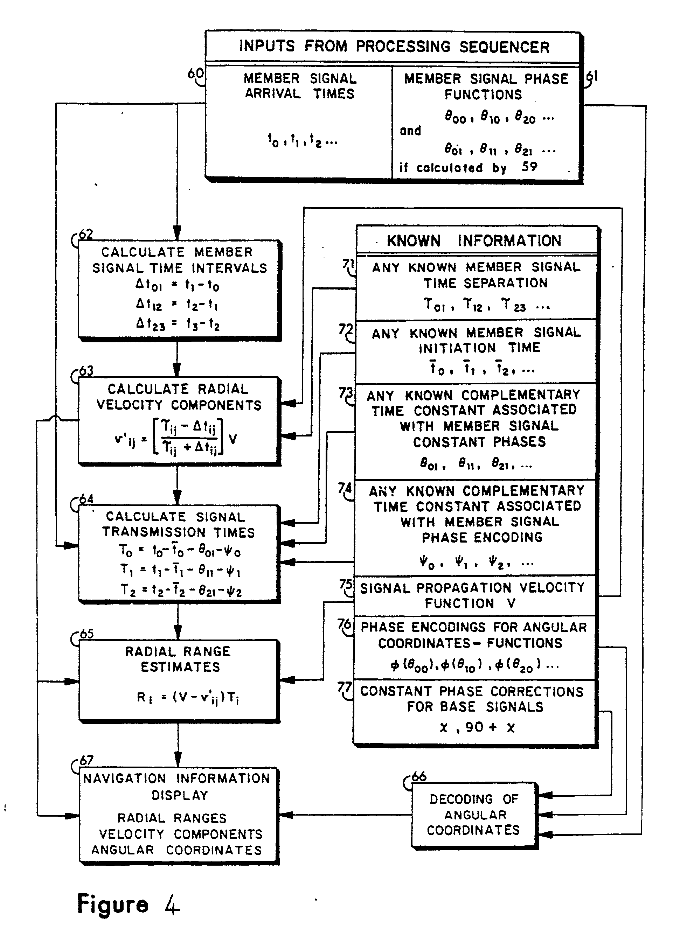

The navigational information estimator 24 of Figs. 2 and 3 is outlined in detail in Fig. 4. In both Figs. 3 and 4, a subscript, or the first subscript of a doubly subscripted quantity refers to the number of an individual member signal of the pattern within a component signal. Processing sequencer outputs 60 and 61 are both arrival times $t_i$ for the member signals and their phase functions. Since the two term Taylor expansion will be taken to approximate the phase functions, these quantities will consist of either the constant terms $\theta_{io}$ if the calculation of 58 is used, or both $\theta_{io}$ and $\theta_{il}$, if the alternative 59 is selected. The constants are complementary in that should the $\theta_{il}$ not be determined as in the calculation of 58, they will nevertheless be known by prior measurement or theoretical calculation and so can be supplied by alternate means should this be required.

Element 62 of Fig. 4 calculates member signal interval times. If interval times 71 are initially predetermined, then in conjunction with the signal propagation velocity V of the medium 75, radial relative velocity components can be calculated according to element 63. Signal transmission times can be computed from the member signal arrival times $t_i$ as in element 64 if member signal initiation times 72 are known. Such transmission time is corrected as indicated for phase terms linearly varying with frequency (elements 73, 74). Among such correction terms would be $\theta_{il}$ which are either measured or complementarily known as previously discussed, and any linear phase terms of the encodings.

Radial range estimates between transmitter and receiver can be made according to element 65 using any computed signal transmission time $T_i$ (from element 64) and correcting for the signal propagation velocity in the medium. Provision is made in 65 for any known radial/relative velocity component as may have been previously determined by element 63.

The decoding of the angular coordinates of element 66 is relatively straightforward. First, correction is made to the measured constant phase for any constants introduced by the base signals (element 77). Such constants might result from the use of a pair of base signals rotated in phase by a constant X from base signals as defined having symmetry and anti-symmetry properties, respectively (Property IV). Also, the base signals used in the processing sequencer 23 may contribute constant phase modifications to the measured member signal measured phases.

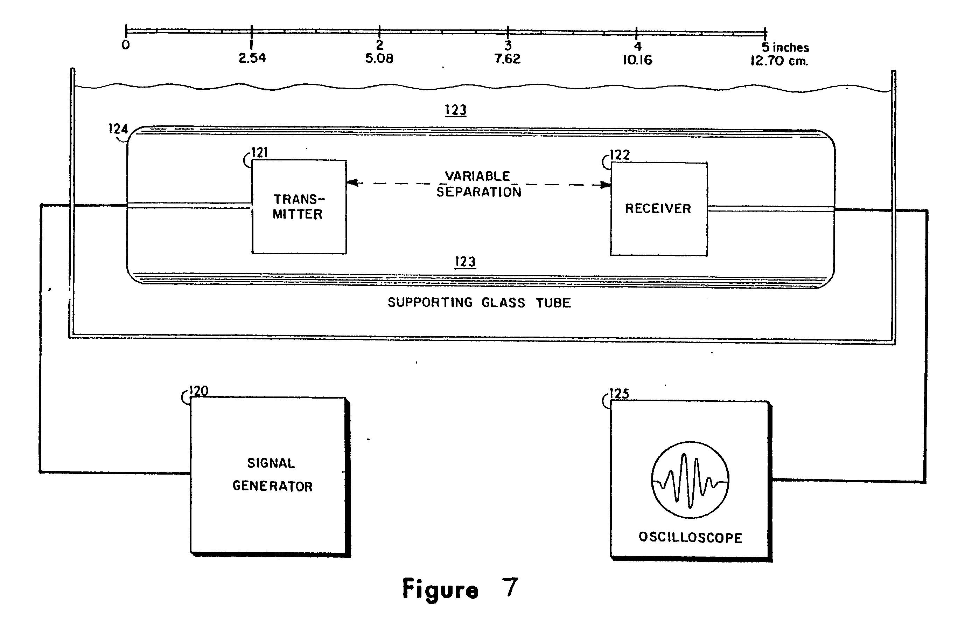

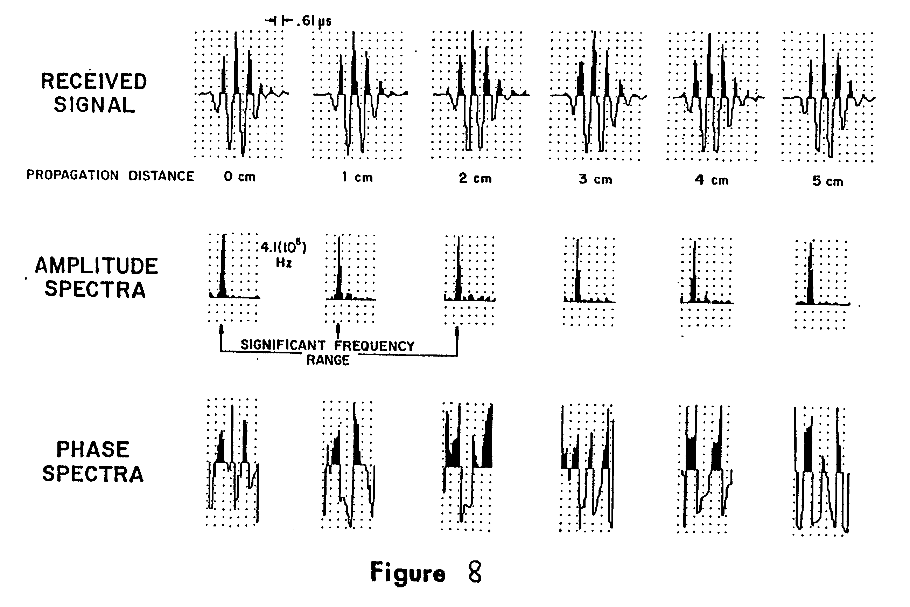

If a single angular coordinate is encoded in each member signal, only the measured phase needs to be associated with the angular coordinate via the known code imposed by the phase lens according to the present invention. Where more than one angular coordinate is encoded in each member signal, a somewhat more complex, but simultaneous decoding scheme is employed as described in the echo location embodiment shown in Fig. 7 of my referenced U.S. patent. In this case at least one angular coordinate must be encoded differently in different member signals. Also, the codes must be independent and at least sufficient in number to permit a simultaneous solution for the angular coordinates. If there are redundant codes, a least squares solution can be applied.

The following exemplary circumstance is illustrative of a situation where more than one encoded angular coordinate is present. Assume that for two member signals which constitute a component signal, the measure constant phases $\theta_{00}$ and $\theta_{10}$ are determined. The two angular coordinates which are encoded are $\phi_0$ and $\phi_1$.

The constant phase encoding for $\phi_0$ will be taken as $\phi_0/h_0$ for both member signals, where $h_0$ is taken as a known constant. For $\phi_1$ on the other hand, the encoding will be $\phi_1/h_1$ for the first member signal and $\phi_1/h_2$ for the second one, where $h_1$ and $h_2$ are known constants.

Now the measurements $\theta_{00}$ and $\theta_{10}$ may be related to $\phi_0$ and $\phi_1$, by the simply developed set of equations:

$$\theta_{00} = \frac{\phi_0}{h_0} + \frac{\phi_1}{h_1}$$

$$\theta_{10} = \frac{\phi_0}{h_0} + \frac{\phi_1}{h_2} \qquad (4)$$

Simultaneous solution of equations (4) gives:

$$\phi_0 = \frac{h_0 h_1 \, \theta_{00} - h_0 h_2 \, \theta_{10}}{h_1 - h_2}$$

$$\phi_1 = \frac{h_1 h_2 \, (\theta_{10} - \theta_{00})}{h_1 - h_2} \qquad (5)$$

which is the desired simultaneous decoding.

The embodiment of Fig. 2 has been set forth in generalized terms since in navigation applications the present invention may be practiced when either the receiver 22 or the transmitter 20 is at a known location. Further, with the present invention, the component signal may be sent off in response to interrogation or at regular intervals. Also, the nature of the particular signals sent may be either acoustic or electromagnetic (including optical). Further, the same or other transmitters may be used to produce other component signals concurrently, and that these other component signals can be received and processed in an analogous manner to give still other estimates of navigational information.

Since viable navigation systems of this type (as described by Fig. 2) may operate according to any or all of the possibilities cited above according to the principles already set forth, a specific illustration of one alternative from the foregoing embodiments is given to help in understanding the present invention.

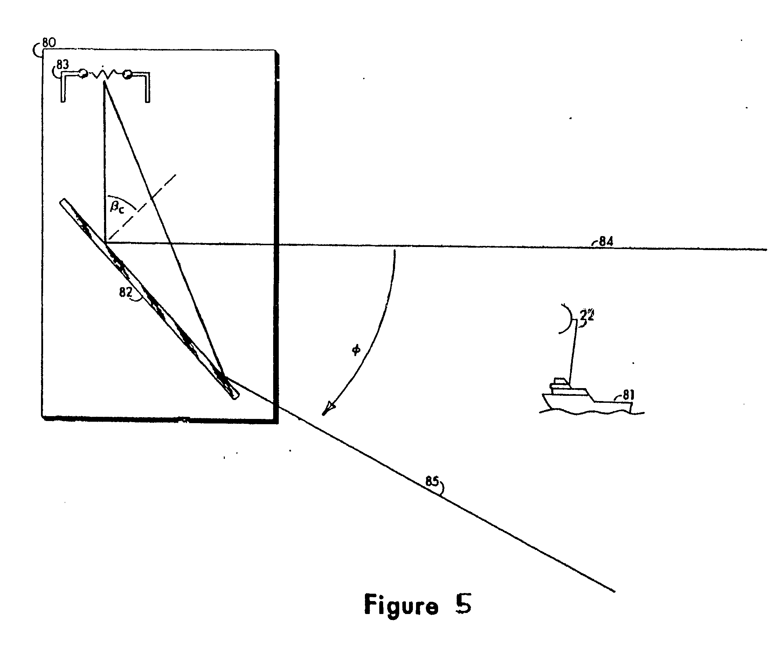

Fig. 5 shows an elementary area navigation system having a single base station 80 at a known location. Receiver 22 onboard mobile platform (i.e. an aircraft, ship or other vehicle or vessel) 81 is able to establish bearing angle $\phi$, radial range, and radial velocity with respect to this base station. The navigation area is defined by two limits, the first comprising a line 84 of zero phase distortion in which the reflection is precisely at the critical angle, a second line 85 being defined by the effective physical limit of a reflector 82. Between limiting lines 84 and 85 there is a constant phase encoding $\theta_0$ that varies with the bearing angle $\phi$.

The encoding of a distinct phase according to the bearing angle $\phi$ is established by reflective means 82, the critical angle for the particular reflective material being $\beta_c$. A broad band source 83 of pulsed electromagnetic radiation is required. Such a source for signals having frequency bandwidth may be designed employing principles analogous to the Travitron developed by Ikor, Inc., of Burlington, Massachusetts, which was reported by the New Scientist, p. 285, August 6, 1970.

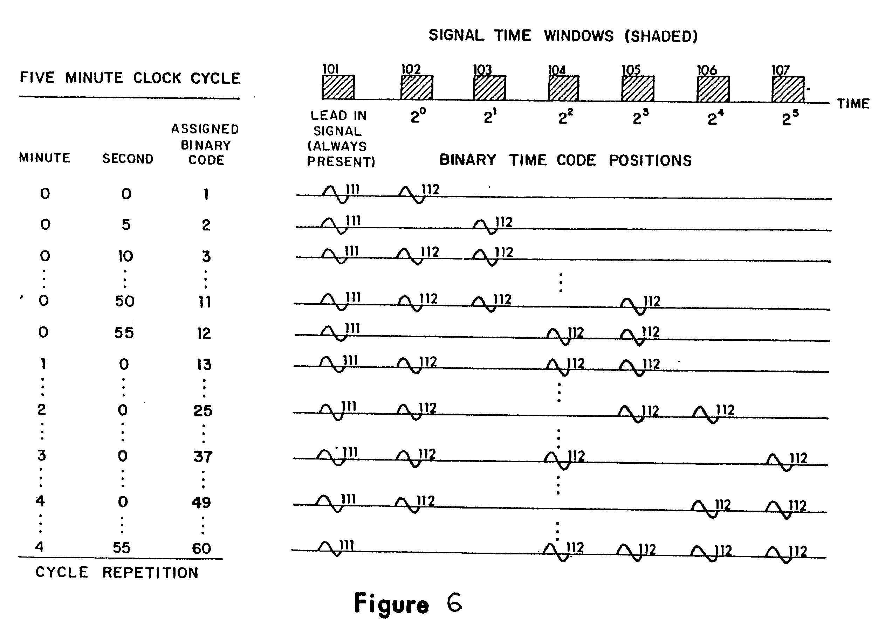

Source 83 of Fig. 5 sends binary encoded pulses trains of member signals which repeat on a five minute clock cycle that is precisely controlled. The pulse sequences are sent at five-second intervals according to the code shown in Fig. 6. Seven time slots or windows are defined to apply for each pulse train sequence. The first read-in or clocking window 101 is always occupied by a pulse 111. The other time slots 102 through 107 represent successive powers of two from $2^0$ to $2^5$. The absence of a pulse in any slot represents a 0 in the corresponding position of the binary code. The presence of a pulse 112 represents a 1. Thus for example, at the line representing a time of two minutes, zero seconds of the five minute clock cycle the decimal representation of the assigned binary code is 25 and is represented by pulses (i.e. ones) in slots 101, 102, 105, 106 and the absence of pulses in slots 103, 104, and 107 to yield the code sequence 1100110 which, on inversion to customary numerical order and removal of the lead-in one, yields the equivalent binary number 11001. Note that the time of member signal initiation can be determined by simple recognition of the binary code. If a mobile platform remains stationary for several intervals at a known location, sufficient information will be received to calibrate a relatively low quality (and correspondingly inexpensive) time standard. With such a calibration achieved, the member signal initiation times are subsequently known.

Each of the component signal trains consists of no less than two member signals, and each signal is of a nature previously described (Properties I through IV). An appropriate frequency band in the case of electromagnetic near shore navigation might be 100-500 mhz. The system shown in Figs. 5 and 7 thus require no interrogation of the transmitter and can provide redundant navigational information by the conventional range-range approach, should there be additional base stations.

From the foregoing description alternative implementations of the generalized embodiment of Fig. 2 using transmitter interrogations, or having known receiver locations and mobile transmitters, or employing only the encoding of angular coordinates will become readily apparent to those skilled in the art.

Again, it is important to emphasize that methods employing phase encoded angular coordinates according to the present invention may be used with conventional approaches such as the range-range operation, where more than one range determination may be made, and that standard statistical procedures for combining and upgrading the accuracy of redundant measurements may be employed.

It is useful at this point to relate features of the present invention to the considerations presented in the background for the invention. First, although member signals are pulse-like, they still are of sufficient duration to benefit from correlation detection, but also to suffer from Doppler distortions. Hence, a phase invariant correlation and detection scheme which complements the signal design is employed. If velocity information is desired more than one member signal is required. While sequences of member signals provide good redundancy and signal-to-noise ratio advantage, their very duration limits the ability to resolve changes in the relative velocity if this too is changing.

The defined class of member signals and signals which can be processed to be member signals have a remarkable ability to bear angular coordinate information as a distortion-resistant phase encoding. Several important practical advantages accrue to this invention owing to this ability and two particularly sophisticated extensions of the basic generalized embodiment of Fig. 2 will be described below.

Certain practical matters first should be taken into consideration. A rather standard approach to developing angular coordinate information in the prior art is to scan in the sense of the angular coordinate with a narrow beam transmitter, as in the case of a conventional radar system. Use of the narrow signal beam allows great concentration of signal energy, and has consequent advantages in noisy environments. One disadvantage, however, is that the time duration of the scanning cycle may leave portions of the navigation area without signal coverage for unacceptable time periods.

The system of the present invention is omnidirectional or at least broad beam by nature. Any diminution of signal level accompanying this feature may be overcome by frequent repetition of the signal patterns over time and the development of statistical models relating the information from one time to the next. In fact, the work of R. E. Kalman as reported in the Journal of Basic Engineering (ASME Transactions), Vol. 82, Pages 35-45, 1960, and the subsequent work on Kalman filters by others offers an ideal analytical vehicle to update the navigation information display 67 of Fig. 4. The navigation system described herein would at no time leave the navigation area without signal coverage for any significant time period.

Also, the ability to label the signal transmission paths with angular coordinates will solve an important problem occurring in long range navigation systems that use either electromagnetic or acoustic signals. For electromagnetic signals the skywave or ionospheric reflection sometimes may not be readily distinguished from directly transmitted signals. Submarine navigation systems similarly have multipath signal arrivals caused by reflections from the surface and bottom of the sea, which similarly may not be conveniently distinguishable from direct transmission paths. With the present invention, direct signal paths can be distinguished from secondary paths in terms of an angular coordinate, so that a new basis for identification of the direct signal is developed.

It follows from the ability to label signal transmission paths with angular coordinates, that a mobile platform such as shown in Fig. 5, once positioned, may position other mobile platforms relative to itself from their reflected signals or echoes. The transmitter and mobile platform carrying the receiver being at known locations constitute an echo location system.

Finally, one must consider the possibility that phase distortions may be impressed into the member signals by properties of the signal propagation medium itself. The presence of such distortions may not necessarily be anticipated or even recognized.

An excellent case in point involves the use of water as a propagation medium for acoustic signals centered around the frequency 1.2 mhz. Such transmissions are often used as small scale simulations of radar and microwave systems.

An experimental study using the techniques of this invention will be described below and documents and measures the hitherto undetected phase distortion or dispersive property of water at the cited frequency.

In this study, the constant phase term, which will be taken to characterize the phase effect of water as a dispersive transmission medium, was sought for the frequency band 0.95-1.45 mhz (roughly centered about 1.2 mhz). For the range of water transmission paths between two and seven centimeters in length, the constant phase distortion was estimated to be 16.7°/cm. Figs. 7, 8 and 9 describe this particular study.

Fig. 7 shows a schematic arrangement of the apparatus. A Datapulse Model 101 signal generator 120 was used to drive a transmitting transducer 121 which sends a narrow acoustic beam to a receiving transducer 122 through water 123 in an immersed open glass tube 124. Transmitter 121 and receiver 122 were crystals having circular faces 1.905 centimeters in diameter, while the glass tube inner diameter measure 3.175 cm. Received waveforms were recorded on Polaroid photographs from a Tektronix type 561A oscilloscope 125. The wave forms were subsequently digitized at a sample interval of .122 μ-sec using a Wang calculator (not shown) with an interfaced digitizer (not shown).

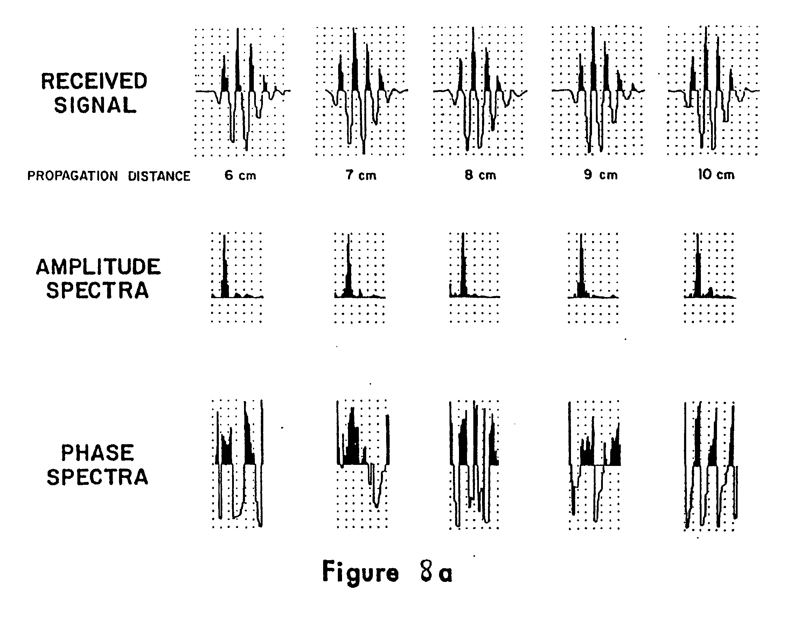

Fig. 8 shows plots of the digitized received member signal waveforms for propagation distances from zero to ten centimeters through the water. Owing to the physical size of the transducer, only distances beyond 1.5 centimeters become representative of the far field signal transmissions. Also, owing to the transducer beam width, results beyond 7.5 centimeters may be expected to show tube sidewall interference effects.

In Fig. 8 amplitude and phase spectra are also shown for the received member signals. The origins for the phase spectral calculations are the time samples at or just before the member signal origins as would be determined following the processing sequence of Fig. 3. In this case, the correlation operations 52, 53 of Fig. 3 are performed with a Klauder signal base pair occupying the frequency band of 0.89 to 1.48 mhz and the origins selected are based on the peak times identified by element 57. Hence the phase spectra and the identification of characteristic constants over the significant frequency band represent the operations of element 59. The simple behavior of the phase spectra over the significant frequencies which results from appropriate choice of the member signal origins are to be noted.

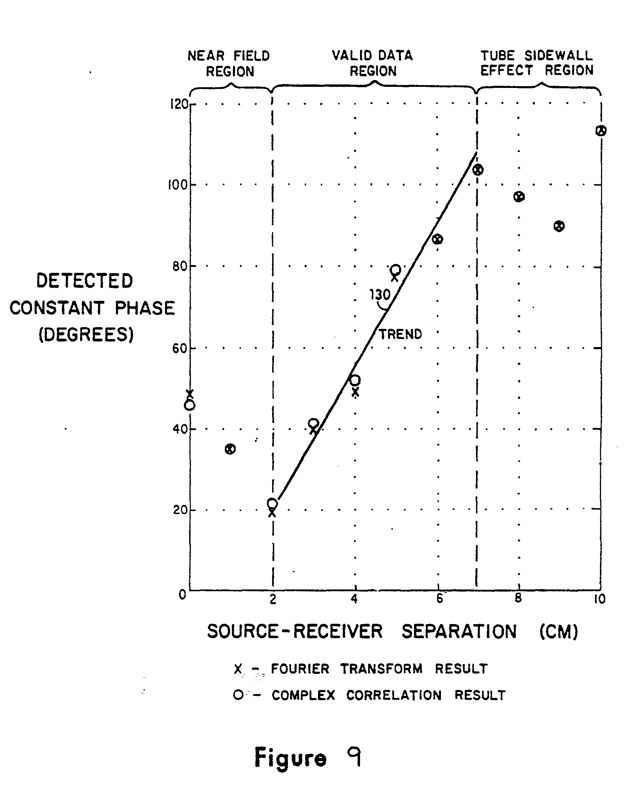

In Fig. 9 the detected constant phases as calculated from the phase spectra over the band of significant frequencies (Fig. 8 and element 59 of Fig. 3) are plotted against the propagation distance, as are the constant phases computed according to element 58 of Fig. 3. The two calculations produce remarkably similar results, which imply a simple linear relationship 130 between the constant phase distortion (imparted by the water) and the propagation path length. As stated earlier, the slope of this relationship is estimated to be 16.7° of constant phase rotation for each centimeter of travel.

Hence, if signal phase distortions are present in the propagation medium, as described, the following description provides an embodiment for a navigation system which can measure such distortions and correct for them accordingly. The essentials for this embodiment have much in common with the method employed to encode more than one angular coordinate in a component signal.

For this embodiment the phase distortions imparted by the medium are treated as one additional encoded angular coordinate. If sufficient redundancy is designed into the component signal, and a sufficient number of the encodings including the medium phase distortion are mathematically independent, then the medium phase distortion is developed as a part of the same simultaneous calculation for the angular coordinates. A specific illustration is given below to explain this general concept.

Assume that two member signals constitute the particular component signal, and that the measured constant phases after processing according to Fig. 3 are $\theta_{00}$ and $\theta_{10}$. The single angular coordinate $\phi_0$ is phase encoded as $\phi_0/h_0$ in the first member signal and as $\phi_0/h_l$ in the second one. A medium induced phase distortion $\phi_m$ is present in both member signals which have travelled over the same path.

The following equations relate the measurements $\theta_{00}$ and $\theta_{10}$ to the desired quantities $\phi_0$ and $\phi_m$:

$$\theta_{00} = \frac{\phi_0}{h_0} + \phi_m$$

$$\theta_{10} = \frac{\phi_0}{h_1} + \phi_m \tag{6}$$

Solving equations (6) gives the following separate values for $\phi_0$ and $\phi_m$:

$$\phi_0 = \frac{h_0 h_1 (\theta_{00} - \theta_{10})}{h_1 - h_0}$$

$$\phi_m = \frac{h_1 \theta_{10} - h_0 \theta_{00}}{h_1 - h_0} \tag{7}$$

When $\phi_m$ is calculated for many ranges, the phase distortion of the medium can be rather simply characterized. Alternatively, if $\phi_m$ is believed to relate to the range in a functionally known manner and range estimates are available, then the decoding equations can be reformulated to directly estimate the parameters of the functional relationship.

In sum, navigation systems which embody elements of the invention described herein offer several novel and highly desirable and useful alternatives for addressing the compromises which inevitably must be faced in developing area navigation systems.

**Claims**

1. A method of ascertaining for a mobile unit, navigational information in terms of at least one angular coordinate, comprising:

transmitting from a transmitter to a receiver one of which is located on the mobile unit and the other of which is located on a fixed unit, a component signal which consists of at least one constituent signal which is not a member signal but which can be transformed to a member signal by a linear filtering operation, a member signal being one which is a linear combination of a pair of base signals $f_0(t)$ and $f_1(t)$ which satisfy the following properties to the practical approximation required:

(i) $f_0(t)$ and $f_1(t)$ share a common amplitude spectrum which is substantially flat over both its continuous bands at positive and negative frequencies and is substantially zero elsewhere;

(ii) there is a finite time interval of duration $\alpha$ before and after which both $f_0(t)$ and $f_1(t)$ may be considered to be zero;

(iii) $f_0(t)$ and $f_1(t)$ are in quadrature; and

(iv) $f_0(t)$ and $f_1(t)$ are transformable to odd and even functions respectively about t=0, defined as the central coordinate value in their interval of definition of duration $\alpha$, by a constant phase shift applied to all frequencies, the or each member signal being phase encoded with a distinction in phase with respect to said at least one angular coordinate;

receiving said component signal at said receiver;
transforming the received signal to at least one member signal by linear filtering;
measuring phase for the transformed signal; and
decoding said at least one angular coordinate from said measured phase.

2. A method according to claim 1, wherein said measuring step includes determining the phase spectrum of the transformed signal.

3. A method according to claim 1 or 2, wherein said step of encoding comprises propagating the transmitted signal through a dispersive medium so that the degree of dispersion varies in accordance with the angular coordinate.

4. A method according to any preceding claim, wherein said step of encoding comprises reflecting the transmitted signal from a surface at an angle beyond the critical angle.

5. A method according to any preceding claim, wherein the propagation medium between the transmitter and the receiver introduces phase changes into signals propagating through the medium and including the additional steps of:
forming at least one component signal comprising at least two constituent signals each of which is transformable as aforesaid;
encoding the distinction in phase in accordance with the angular coordinate in at least one of the constituent signals, such encoding being independent of any phase changes introduced by the propagation medium and with the number of such independent encodings being greater than the number of angular coordinates;
on receipt of the propagated signals, identifying within the received component signal the said constituent signals;
measuring the phases of the identified constituent signals; and
separating the phase changes introduced by the medium from the angularly encoded phase.

6. A method according to any one of claims 1 to 4, wherein the navigational information is ascertained in terms of two angular coordinates and including the steps of:
forming at least one component signal comprising two constituent signals each of which is transformable as aforesaid;
independently encoding the distinction in phase in accordance with each of the two constituent signals while propagating the component signal;
on receipt of the propagated component signal identifying the constituent signals within the received component signal;
measuring the phases of identified signals; and
decoding angular coordinates from the measured phases and the independent encodings.

7. A method according to claim 1, wherein the phase of the propagated signal is substantially constant over its frequency bandwidth.

8. A method according to any preceding claim, wherein a portion of the distinction in phase of the signal which changes the signal shape is substantially constant over the frequency bandwidth of the signal.

**Patentansprüche**

1. Verfahren zur Ermittlung von Navigationsdaten für eine mobile Einheit in Form von wenigstens einer Winkelkoordinate, bei dem
von einem Sender zu einem Empfänger, von denen einer auf der mobilen Einheit und der andere auf einer festen Einheit angeordnet ist, ein Komponentensignal, das aus wenigstens einem Bestandteilsignal besteht, das kein Teilsignal ist, aber in ein Teilsignal durch lineare Filterung transformierbar ist, ein Teilsignal übertragen wird, das ein Signal darstellt, welches eine lineare Kombination aus einem Paar von Grundsignalen $f_0(t)$ und $f_1(t)$ darstellt, welche die folgenden Eigenschaften mit der erforderlichen praktischen Näherung erfüllen:
(i) $f_0(t)$ und $f_1(t)$ teilen ein gemeinsames Amplitudenspektrum, das im wesentlichen flach ist über seine beiden kontinuierlichen Bänder bei positiven und negativen Frequenzen und außerhalb dieses Bereiches im wesentlichen gleich null ist,
(ii) es gibt ein endliches Zeitintervall mit der Dauer $\alpha$, vor und nach welchem die Signale $f_0(t)$ und $f_1(t)$ gleich Null angesehen werden können,
(iii) $f_0(t)$ und $f_1(t)$ sind um 90° phasenverschoben,
(iv) $f_0(t)$ und $f_1(t)$ sind in ungerade bzw. gerade Funktionen um $t = 0$, definiert als zentraler Koordinatenwert in ihrem Definitionsintervall mit der Dauer $\alpha$, durch eine konstante Phasenverschiebung transformierbar, die auf alle Frequenzen angewandt wird, wobei das oder jedes Teilsignal gegenüber wenigstens der einen Winkelkoordinate mit einer Phasenunterscheidung phasenkodiert ist; bei dem
das Komponentensignal am Empfänger empfangen wird;
das empfangene Signal in wenigstens ein Teilsignal durch lineare Filterung transformiert wird;
die Phase für das transformierte Signal gemessen wird; und
wenigstens die eine Winkelkoordinate aus der gemessenen Phase dekodiert wird.

2. Verfahren nach Anspruch 1, bei dem während des Meßschrittes das Phasenspektrum des transformierten Signals bestimmt wird.

3. Verfahren nach Anspruch 1 oder 2, bei dem der Kodierungsschritt die Fortpflanzung des übertragenen Signals durch ein dispersives Medium enthält, so daß sich der Dispersionsgrad entsprechend der Winkelkoordinate ändert.

4. Verfahren nach einem der vorangehenden Ansprüche, bei dem der Kodierschritt das Reflektieren des übertragenen Signals von einer Oberfläche mit einem Winkel außerhalb des kritischen Winkels beinhaltet.

5. Verfahren nach einem der vorangehenden Ansprüche, bei dem das Fortpflanzungsmedium zwischen Sender und Empfänger Phasenänderungen in die Signale einführt, die sich durch das Medium fortpflanzen, und wobei das Verfahren folgende zusätzliche Schritte aufweist:

Bildung wenigstens eines Komponentensignals, das wenigstens zwei Bestandteilsignale enthält, von denen jedes in der vorstehend genannten Weise transformierbar ist;

Kodierung der Phasenunterscheidung entsprechend der Winkelkoordinate in wenigstens einem der Bestandteilsignale, wobei die Kodierung unabhängig ist von Phasenänderungen, die durch das Fortpflanzungsmedium eingeführt werden und wobei die Zahl derartiger unabhängiger Kodierungen größer ist als die Zahl der Winkelkoordinaten;

bei Empfang der fortgepflanzten Signale Identifikation der Bestandteilsignale innerhalb des empfangenen Komponentensignals;

Messen der Phasen der identifizierten Bestandteilsignale; und

Trennung der durch das Medium eingeführten Phasenänderungen von der winkelkodierten Phase.

6. Verfahren nach einem der Ansprüche 1 bis 4, bei dem die Navigationsinformation bzw. Navigationsdaten in Form von zwei Winkelkoordinaten ermittelt werden und folgende Schritte enthalten sind:

Bildung wenigstens eines Komponentensignals, das zwei Bestandteilsignale aufweist, von denen jedes in der vorstehend genannten Weise transformierbar ist;

unabhängige Kodierung der Phasenunterscheidung entsprechend jedem der beiden Bestandteilsignale während der Fortpflanzung des Komponentensignals;

Identifikation der Bestandteilsignale innerhalb des empfangenen Komponentensignals bei Empfang des fortgepflanzten Komponentensignals;

Messung der Phasen der identifizierten Signale; und

Dekodierung von Winkelkoordinaten aus den gemessenen Phasen und den unabhängigen Kodierungen.

7. Verfahren nach Anspruch 1, bei dem die Phase des fortgepflanzten Signals im wesentlichen konstant ist über seine Frequenzbandbreite.

8. Verfahren nach einem der vorangehenden Ansprüche, bei dem ein Abschnitt der Phasenunterscheidung desjenigen Signals, welches die Signalform ändert, im wesentlichen konstant ist über die Frequenzbandbreite des Signals.

## Revendications

1. Un procédé destiné à déterminer, pour une unité mobile, des informations de navigation en termes d'au moins une coordonnée angulaire, comprenant:

une émission depuis un émetteur vers un récepteur, parmi lesquels l'un est situé sur l'unité mobile et l'autre est situé sur une unité fixe, d'un signal de composants qui consiste en au moins un constituant, signal qui n'est pas un signal élémentaire mais qui peut être transformé en un signal élémentaire par une opération de filtrage linéaire, un signal élémentaire étant un signal qui comprend une combinaison linéaire d'une paire de signaux de base $f_0(t)$ et $f_1(t)$, qui satisfont aux propriétés suivantes, à l'approximation pratique nécessaire:

(i) $f_0(t)$ et $f_1(t)$ partagent un spectre d'amplitude commun qui est sensiblement plat sur ses deux bandes continues aux fréquences positives et négatives et qui est sensiblement zéro ailleurs;

(ii) il existe un intervalle de temps fini d'une durée $\alpha$ avant et après lequel à la fois $f_0(t)$ et $f_1(t)$ peuvent être considérés comme zéro;

(iii) $f_0(t)$ et $f_1(t)$ sont en quadrature; et

(iv) $f_0(t)$ et $f_1(t)$ sont transformables en fonctions impaire et paire respectivement autour de $t=0$, défini comme la valeur centrale de coordonnée dans leur intervalle de définition de durée $\alpha$, par un décalage de phase constant appliqué à toutes les fréquences, le signal élémentaire ou chacun d'eux étant encodé en phase avec une distinction de phase par rapport à ladite coordonnée angulaire au moins unique;

une réception dudit signal de composant audit récepteur;

une transformation du signal reçu en au moins un signal élémentaire par filtrage linéaire;

une mesure de phase du signal transformé; et

un décodage de ladite coordonnée angulaire au moins unique à partir de ladite phase mesurée.

2. Un procédé selon la revendication 1, dans lequel la dite étape de mesure comprend la détermination du spectre de phase du signal transformé.

3. Un procédé selon la revendication 1 ou 2, dans lequel ladite étape d'encodage comprend la propagation du signal émis à travers un milieu dispersif de façon que le degré de dispersion varie selon la coordonnée angulaire.

4. Un procédé selon une revendication précédente quelconque, dans lequel ladite étape d'encodage comprend la réflexion du signal émis depuis une surface selon un angle au-delà de l'angle critique.

5. Un procédé selon une revendication précédente quelconque, dans lequel le milieu de propagation entre l'émetteur et le récepteur introduit des variations de phase dans des signaux qui se propagent à travers le milieu et comprenant les étapes additionnelles consistant à:
former au moins un signal composant comprenant au moins deux signaux constituants dont chacun est transformable comme dit ci-dessus;
encoder la distinction de phase selon la coordonnée angulaire dans au moins l'un des signaux constituants, cet encodage étant indépendant de toutes variations de phase introduites par le milieu de propagation et le nombre de ces encodages indépendants étant supérieur au nombre de coordonnées angulaires;
à la réception du signal propagé, identifié à l'intérieur du signal composant reçu lesdits signaux constituants;
mesurer les phases des signaux constituants identifiés; et
séparer, de la phase encodée angulairement, les variations de phase introduites par le milieu.

6. Un procédé selon l'une quelconque des précédentes revendications 1 à 4, dans lequel l'information de navigation est déterminée en terme de deux coordonnées angulaires et comprend les étapes consistant à:
former au moins un signal de composant comprenant deux signaux constituants dont chacun est transformable comme mentionné plus haut;
encoder indépendamment la distinction de phase selon chacun des signaux constituants tout en propageant le signal composant;
à la réception du signal composant propagé, identifier les signaux constituants à l'intérieur du signal composant reçu;
mesurer les phases de signaux identifiés; et
décoder des coordonnées angulaires à partir des phases mesurées et des encodages indépendants.

7. Un procédé selon la revendication 1, dans lequel la phase du signal propagé est sensiblement constante sur toute sa largeur de bande de fréquences.

8. Un procédé selon une revendication précédente quelconque, dans lequel une partie de la distinction de phase du signal qui modifie la forme de signal est sensiblement constante sur la largeur de bande de fréquence du signal.

Amplitude

11

10

12

Amplitude

t=o

t

t=o

t

$\frac{\alpha}{2}$   $\frac{\alpha}{2}$

$\frac{\alpha}{2}$   $\frac{\alpha}{2}$

Time Domain:  $f_0(t)$
($f_0(t)$ is an odd function )

Time Domain:  $f_1(t)$
($f_1(t)$ is an even function)

13

$-\omega_f$   $-\omega_0$   $\omega = 0$   $\omega_0$   $\omega_f$

Frequency Domain:
Amplitude  Spectrum  of  $f_0(t)$ and $f_1(t)$
defined as $F(\omega)$

Angle

14

$(+\frac{\pi}{2})$ + + + + + +

$\omega$

+ + + + + + + + + $(-\frac{\pi}{2})$

Angle

15

$\omega$

Frequency  Domain:
Phase  Spectrum  of  $f_0(t)$

Frequency  Domain:
Phase  Spectrum  of  $f_1(t)$

$$F_0(\omega) = \int f_0(t)e^{-i\omega t}dt$$
$$= F(\omega)e^{-i\,sgn(\omega)\frac{\pi}{2}}$$
$$= -i\,sgn(\omega)\,F(\omega)$$

$$F_1(\omega) = \int f_1(t)e^{-i\omega t}dt$$
$$= F(\omega)$$

Where $sgn(\omega) = +1$ , $\omega > 0$
$$= -1 , \omega < 0$$

TIME DOMAIN  AND COMPLEX FREQUENCY DOMAIN (IN POLAR FORM)
REPRESENTATIONS  OF  THE  FUNCTION  PAIR  $f_0(t)$, $f_1(t)$

# Figure 1

Figure 2

Figure 3

Figure 4

Figure 5

EP 0 213 650 B1

SIGNAL TIME WINDOWS (SHADED)

FIVE MINUTE CLOCK CYCLE

| MINUTE | SECOND | ASSIGNED BINARY CODE |
|---|---|---|
| 0 | 0 | 1 |
| 0 | 5 | 2 |
| 0 | 10 | 3 |
| ⋮ | ⋮ | ⋮ |
| 0 | 50 | 11 |
| 0 | 55 | 12 |
| 1 | 0 | 13 |
| ⋮ | ⋮ | ⋮ |
| 2 | 0 | 25 |
| ⋮ | ⋮ | ⋮ |
| 3 | 0 | 37 |
| ⋮ | ⋮ | ⋮ |
| 4 | 0 | 49 |
| ⋮ | ⋮ | ⋮ |
| 4 | 55 | 60 |

CYCLE REPETITION

101 102 103 104 105 106 107

TIME

LEAD IN SIGNAL (ALWAYS PRESENT)   $2^0$   $2^1$   $2^2$   $2^3$   $2^4$   $2^5$

BINARY TIME CODE POSITIONS

Figure 6

EP 0 213 650 B1

Figure 7

EP 0 213 650 B1

Figure 8

RECEIVED SIGNAL

PROPAGATION DISTANCE   0 cm      1 cm      2 cm      3 cm      4 cm      5 cm

⊣⊢.61 μs

AMPLITUDE SPECTRA

4.1(10⁶) Hz

SIGNIFICANT FREQUENCY RANGE

PHASE SPECTRA

EP 0 213 650 B1

RECEIVED
SIGNAL

PROPAGATION DISTANCE    6 cm        7 cm        8 cm        9 cm        10 cm

AMPLITUDE
SPECTRA

PHASE
SPECTRA

Figure 8 a

EP 0 213 650 B1

Figure 9